# EUROPÄISCHE PATENTANMELDUNG

(11) **EP 4 276 602 A1**
(43) Veröffentlichungstag der Anmeldung: **15.11.2023**
(21) Anmeldenummer: 22172997.3
(22) Anmeldetag: 12.05.2022
(51) Int. Cl.: G06F 8/41

(54) **SYSTEM MIT QUELLCODEUMWANDLER-SPEZIFIZIERTEN SPEICHERBEREICHEN**

(71) Anmelder: Siemens Aktiengesellschaft, 80333 München (DE)
(72) Erfinder: Pyka, Stefan, 85570 Markt Schwaben (DE); Zwanzger, Johannes, 85579 Neubiberg (DE)
(74) Vertreter: Siemens Patent Attorneys

(57) **Zusammenfassung**

Die Erfindung betrifft ein System (3), aufweisend:
- einen ersten Quellcodeumwandler (1),
- eine erste Binärdatei (111), welche von dem ersten Quellcodeumwandler (1) aus einem ersten Quellcode (11) erstellt wurde,
- eine zweite Binärdatei (222) und
- einen zweiten Speicherbereich (2222),
wobei der erste Quellcodeumwandler (1) ausgebildet ist, die erste Binärdatei (111) so zu erstellen, dass diese auf einen ersten Speicherbereich (1111) zugreifen kann,
wobei der erste Quellcodeumwandler (1) außerdem ausgebildet ist, die erste Binärdatei (111) so zu erstellen, dass diese nicht auf den zweiten Speicherbereich (2222) zugreifen kann, und
wobei die zweite Binärdatei (222) ausgebildet ist, auf den zweiten Speicherbereich (2222) zuzugreifen.

Außerdem betrifft die Erfindung ein zugehöriges Verfahren.

## Beschreibung

### HINTERGRUND DER ERFINDUNG

### Gebiet der Erfindung

Die vorliegende Erfindung betrifft ein System mit Quellcodeumwandler-spezifizierten Speicherbereichen. Außerdem betrifft die Erfindung ein zugehöriges Verfahren.

### Beschreibung des Stands der Technik

Verschiedene Produkte, insbesondere PLCs, Motion-Control-Systeme, Edge Geräte, u.Ä., erlauben oder setzen für eine sinnvolle Nutzbarkeit sogar voraus, dass neben den bereits in der Firmware durch den Hersteller eingebrachten Funktionen und Applikationen (ab jetzt als "FW-Applikationen" bezeichnet) auch vom Anwender bzw. einer dritten Partei entwickelte Programme (ab jetzt als "Userprogramme" bezeichnet) zur Ausführung gebracht werden können.

Die Userprogramme können dabei in unterschiedlichsten Sprachen verfasst sein (z.B. C, Python, AWL/KOP/FBS, ...) und werden entweder durch einen Compiler oder einen Interpreter in nativen Code für das Zielsystem übersetzt. Dies birgt jedoch die Gefahr, dass ein Angreifer durch Einbringen schadhafter Userprogramme, welche lesend und schreibend auf kritische Speicherbereiche des Systems zugreifen können, das Laufzeitverhalten eines Produktexemplars verändert und damit dessen Integrität gefährdet. Außerdem kann er unter Umständen Produkt- oder Anwender-spezifisches Knowhow auslesen, auf das auf normalem Weg kein Zugriff bestanden hätte.

Die Lösung für die Separierung verschiedener Programme im Speicher erfolgt durch eine Memory Management Unit (MMU). Allerdings verfügen gerade kleinere Systeme nicht immer über eine ausreichend komplexe Memory Management Unit, um eine beliebige Anzahl von Programmen ohne nennenswerten Performanceverlust separieren zu können.

Eine andere Möglichkeit besteht darin, extern eingebrachte Programme nur dann zu übersetzen und/oder auszuführen, wenn deren Vertrauenswürdigkeit anhand einer beigefügten Signatur erfolgreich überprüft werden konnte. Der für die Prüfung notwendige öffentliche Schlüssel muss dabei allerdings vorab auf dem System eingebracht worden sein und beschränkt den Kreis der Personen, die entsprechende Programme erstellen können, auf diejenigen, die Zugang zum zugehörigen privaten Schlüssel haben.

Bekannt ist auch die Anwendung der Container-Technologie oder von virtuellen Maschinen. Anwenderprogramme werden innerhalb der Container oder virtuellen Maschinen ausgeführt und sind auf diese Weise separiert von den Firmware-Applikationen.

Die Aufgabe der Erfindung besteht darin, eine Lösung für einen Integritäts- und Knowhow-Schutz auf Systemen, welche die Ausführung extern, insbesondere vom Anwender, eingebrachter Programme unterstützen, bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein System, aufweisend:
- einen ersten Quellcodeumwandler,
- eine erste Binärdatei, welche von dem ersten Quellcodeumwandler aus einem ersten Quellcode erstellt wurde,
- eine zweite Binärdatei und
- einen zweiten Speicherbereich,
wobei der erste Quellcodeumwandler ausgebildet ist, die erste Binärdatei so zu erstellen, dass diese auf einen ersten Speicherbereich zugreifen kann,
wobei der erste Quellcodeumwandler außerdem ausgebildet ist, die erste Binärdatei so zu erstellen, dass diese nicht auf den zweiten Speicherbereich zugreifen kann, und wobei die zweite Binärdatei ausgebildet ist, auf den zweiten Speicherbereich zuzugreifen.

Die erste Binärdatei ist in einer bevorzugten Ausführung insbesondere ein Benutzeranwendungsprogramm und die zweite Binärdatei ist insbesondere ein Firmware-Anwendungsprogramm.

Dass der erste Quellcodeumwandler außerdem ausgebildet ist, die erste Binärdatei so zu erstellen, dass diese nicht auf den zweiten Speicherbereich zugreifen kann, resultiert erfindungsgemäß darin, dass die erste Binärdatei keinen Zugriff auf den zweiten Speicherbereich hat. Damit sorgt der erste Quellcodeumwandler erfindungsgemäß dafür, dass die erste Binärdatei, insbesondere ein von ihm ausgeführtes Programm, niemals auf Speicheradressen außerhalb der vorgesehenen Zone, wobei der zweite Speicherbereich nicht zu der vorgesehenen Zone gehört, zugreifen kann. Eine vorgesehene Zone für die erste Binärdatei ist insbesondere ein erster Speicherbereich. Zwischen dem ersten Speicherbereich und dem zweiten Speicherbereich bestehen insbesondere keine Überschneidungen.

In einer Ausführungsmöglichkeit, wird zunächst der betreffende gesamte Speicher des Systems in zwei Bereiche aufgeteilt, nämlich einen, auf den nur die zweite Binärdatei, insbesondere Firmware-Applikationen Zugriff haben ("MEM_AREA_FA") und einen, auf den auch die erste Binärdatei, insbesondere Userprogramme, zugreifen können ("MEM AREA UP"). Ob Firmware-Applikationen auch auf MEM_AREA_UP zugreifen können, wird nach Bedarf entschieden.

Nun wird der erste Quellcodeumwandler, insbesondere ein Compiler_UP (UserProgramm) so gebaut, dass die Adressierung einer von ihm gebauten bzw. interpretierten ersten Binärdatei, insbesondere eines von ihm gebauten bzw. interpretierten Binaries den ersten Speicherbereich, d.h. den Bereich MEM_AREA_UP, nie verlässt. Dies kann insbesondere dadurch geschehen, dass der Compiler_UP an allen Stellen, an denen mit direkter oder indirekter Adressierung auf Speicheradressen zugegriffen wird, vorab eine entsprechende Operation auf den Adressoperanden anwendet. Dies kann insbesondere durch ein Setzen eines führenden Adressbits geschehen, insbesondere immer 0 oder 1 für die erste Binärdatei bzw. eine User-Applikation. Der erste Quellcode wird also so kompiliert bzw. interpretiert, dass er immer auf einen bestimmten Speicherbereich zugreift.

Ein Aspekt der Erfindung besteht darin, dass der erste Quellcodeumwandler so ausgebildet ist, dass er erste Binärdateien immer so erstellt, dass diese keinen Zugriff auf kritische Speicherbereiche (insbesondere den zweiten Speicherbereich) haben.

Die Erfindung bietet eine Möglichkeit den Zugriff von Userprogrammen auf das System so weit wie möglich zu beschränken, ohne dabei die Spannweite ihrer Funktionalität zu beeinträchtigen. Dies wird ohne weitere HW-Unterstützung, insbesondere durch eine Memory Management Unit (MMU), ermöglicht.

In einer Weiterbildung der Erfindung wurde die zweite Binärdatei von einem zweiten Quellcodeumwandler aus einem zweiten Quellcode erstellt.

Die Erfindung hat den Vorteil, dass vom Hersteller oder Produktentwickler eingebrachte Firmware-Applikationen üblicherweise mit einem anderen Quellcodeumwandler, dem zweiten Quellcodeumwandler, insbesondere ein Compiler oder ein Interpreter, auch als Compiler _FA (Firmeware) bezeichenbar, erstellt bzw. ausgeführt werden als Userprogramme, dadurch lässt sich die Erfindung direkt auf solchen Systemen ausführen. Es können von den jeweiligen Compilern oder Interpretern bestimmte Eigenschaften von Adressierungsoperanden, insbesondere ein Zustand des führenden Bits, in von ihnen erzeugten oder ausgeführten Programmen erzwungen und so bereits auf Ebene der erstellten Binaries/ausgeführten Programme unautorisierte Zugriffe auf fremden Speicher verhindert werden. Insbesondere setzt die Erfindung voraus, dass Compiler_UP (egal, ob Compiler oder Interpreter) auf dem System vorliegt und gegen Veränderung von außen geschützt ist. Vorzugsweise ist Compiler_UP Teil der Firmware, da dann Maßnahmen zum Firmwareschutz greifen.

In einer weiteren Weiterbildung der Erfindung weist das System außerdem den zweiten Quellcodeumwandler auf, wobei der zweite Quellcodeumwandler als Interpreter ausgebildet ist. Alternativ ist der zweite Quellcodeumwandler nicht Teil des Systems, sondern ist beim Entwickler oder Hersteller des Systems vorliegend.

In einer weiteren Weiterbildung der Erfindung ist der zweite Quellcodeumwandler als Compiler ausgebildet. Handelt es sich bei dem zweiten Quellcodeumwandler, insbesondere Compiler_FA, um einen Interpreter, so muss dieser ebenfalls auf dem System vorliegen und gegen Manipulationen geschützt sein.

Handelt es sich bei dem zweiten Quellcodeumwandler dagegen um einen Compiler, wird Compiler_FA in der Regel nicht auf dem System, sondern nur beim Entwickler vorliegen.

In einer weiteren Weiterbildung der Erfindung ist der zweite Quellcodeumwandler ausgebildet, die zweite Binärdatei so zu erstellen, dass diese auf den zweiten Speicherbereich zugreifen kann,. Dies hat den Vorteil, dass die zweite Binärdatei auf den zweiten Speicherbereich Zugriff hat, wobei erste Binärdatei auf diesen Speicherbereich keinen Zugriff hat. Nach dieser Ausführungsform wird auch Compiler_FA mit den gleichen Mechanismen so gebaut, dass von ihm erzeugte bzw. interpretierte Programme nie auf Adressen außerhalb des zweiten Speicherbereichs, auch als MEM_AREA_FA bezeichenbar, zugreifen.

In einer weiteren Weiterbildung der Erfindung ist die zweite Binärdatei außerdem ausgebildet, auf den ersten Speicherbereich zuzugreifen. Nach dieser Ausführungsform hat die zweite Binärdatei außerdem Zugriff auf den ersten Speicherbereich, auf welchen auch die erste Binärdatei Zugriff hat.

In einer weiteren Weiterbildung der Erfindung ist der erste Quellcodeumwandler als Compiler oder Interpreter ausgebildet.

Die Erfindung wird auch durch Ansätze des memory mappings von externen Speichermodulen unterstützt. Wird z.B. externer Speicher an das System angebunden, so muss diesem eine fester Adressbereich, der erste Speicherbereich, zugewiesen werden. Dadurch wird erreicht, dass die erste Binärdatei, insbesondere ein Anwenderprogramm, nur in dem extern angebundenen Speichermodul läuft, während die zweite Binärdatei, insbesondere eine FW-Applikation, nur in den anderen verfügbaren Speichermodulen vorhanden ist.

In einer weiteren Weiterbildung der Erfindung weist das System außerdem den ersten Speicherbereich auf.

In einer weiteren Weiterbildung der Erfindung ist die erste Binärdatei als Benutzeranwendungsprogramm ausgebildet. In einer weiteren Weiterbildung der Erfindung ist die zweite Binärdatei als Firmware-Anwendungsprogramm ausgebildet. Dies hat den Vorteil, dass das Benutzeranwendungsprogramm nur auf den ersten Speicherbereich, nicht aber auf den zweiten Speicherbereich Zugriff hat.

In einer weiteren Weiterbildung der Erfindung ist das System als:
- ein Gerät und/oder
- eine speicherprogrammierbare Steuerung, insbesondere ein Programmable Logic Controller (PLC) und/oder
- ein Motion-Control-System und/oder
- ein Edge-Gerät
ausgebildet.

In einer weiteren Weiterbildung der Erfindung weist der erste Quellcodeumwandler einen Manipulationsschutz auf, welcher den ersten Quellcodeumwandler vor einer Manipulation schützt. Dies ist von Vorteil, da so die Erstellung der ersten Binärdatei und deren Zugriff auf nur den ersten Speicherbereich nicht ohne erfolgreichen Angriff modifizierbar ist.

In einer weiteren Weiterbildung der Erfindung ist der zweite Speicherbereich anhand mindestens eines führenden Adressbits erkennbar.

In einer weiteren Weiterbildung der Erfindung sind der zweite Speicherbereich und der erste Speicherbereich anhand mindestens eines führenden Adressbits erkennbar. Dies hat den Vorteil, dass der erste Speicherbereich und der zweite Speicherbereich unterscheidbar sind.

In einer weiteren Weiterbildung der Erfindung sind der erste Speicherbereich und der zweite Speicherbereich anhand eines Musters voneinander unterscheidbar.

Die Aufteilung des Speichers erfolgt nach diesen Ausführungsformen insbesondere über ein leicht sicherstellbares Muster in der Adresse der Bereiche. Eine einfache und insbesondere unter Caching-Aspekten performanceförderliche Aufteilung wäre, dass der zweite Speicherbereich, insbesondere MEM_AREA_FA, alle Speicherzellen umfasst, deren führendes Adressbit eine "0" ist, während der erste Speicherbereich, insbesondere MEM_AREA_UP, aus denjenigen Speicherzellen besteht, deren führendes Adressbit "1" ist. Insbesondere sind auch andere bzw. feingranularere Aufteilungen bevorzugt, insbesondere führende drei Adressbits "111" für MEM_AREA_UP, alle anderen Adressbits für MEM_AREA_FA.

In einer weiteren Weiterbildung der Erfindung weist das System außerdem auf:
- einen dritten Quellcodeumwandler,
- eine dritte Binärdatei, welche von dem dritten Quellcodeumwandler aus einem dritten Quellcode erstellt wurde,
wobei der dritte Quellcodeumwandler ausgebildet ist, die dritte Binärdatei so zu erstellen, dass diese auf einen dritten Speicherbereich zugreifen kann,
wobei der dritte Quellcodeumwandler außerdem ausgebildet ist, die dritte Binärdatei so zu erstellen, dass diese nicht auf den ersten Speicherbereich und den zweiten Speicherbereich zugreifen kann.

Der Vorteil dieser Ausführungsform ist, dass bei mehr als drei Quellcodeumwandlern oder insbesondere mehr als einem Quellcodeumwandler, welcher entsprechend dem ersten Quellcodeumwandler ausgebildet ist, insbesondere Compiler_UP, auch der Speicher in entsprechend viele verschiedene Speicherzonen aufgeteilt wird, wobei jeder einzelne Compiler_UP dafür sorgt, dass von ihm ausgeführte Programme niemals auf Adressen außerhalb der vorgesehenen Zone zugreifen können. Der dritte Speicherbereich bleibt von allen Binärdateien, welche von dem ersten Quellcodeumwandler oder dem zweiten Quellcodeumwandler ausgebildet sind unberührt, da kein Zugriff möglich ist.

Die Erfindung umfasst außerdem ein Verfahren zum Zugreifen auf einen ersten Speicherbereich durch eine erste Binärdatei und zum Zugreifen auf einen zweiten Speicherbereich durch eine zweite Binärdatei,
mit den Schritten:
- Ein Erstellen der ersten Binärdatei aus einem ersten Quellcode, wobei die erste Binärdatei so erstellt wird, dass diese nicht auf den zweiten Speicherbereich zugreifen kann,
- Ein Zugreifen auf den ersten Speicherbereich durch die erste Binärdatei und
- Ein Zugreifen auf den zweiten Speicherbereich durch die zweite Binärdatei.

Zusammengefasst bietet die Erfindung den Vorteil, dass kritische Speicherbereiche des Systems vor Zugriff durch extern erstellte Programme, erste Binärdateien, geschützt werden, ohne dass auf dem System eine Memory Management Unit verbaut sein muss. Zugriffe werden direkt verhindert und nicht erst anhand ihrer Auswirkungen erkannt.

Die Erfindung leistet dadurch einen Beitrag zum Integritäts- und Knowhow-Schutz bei Systemen, welche die Ausführung extern, insbesondere vom Anwender, eingebrachter Programme unterstützen.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnung ersichtlich.

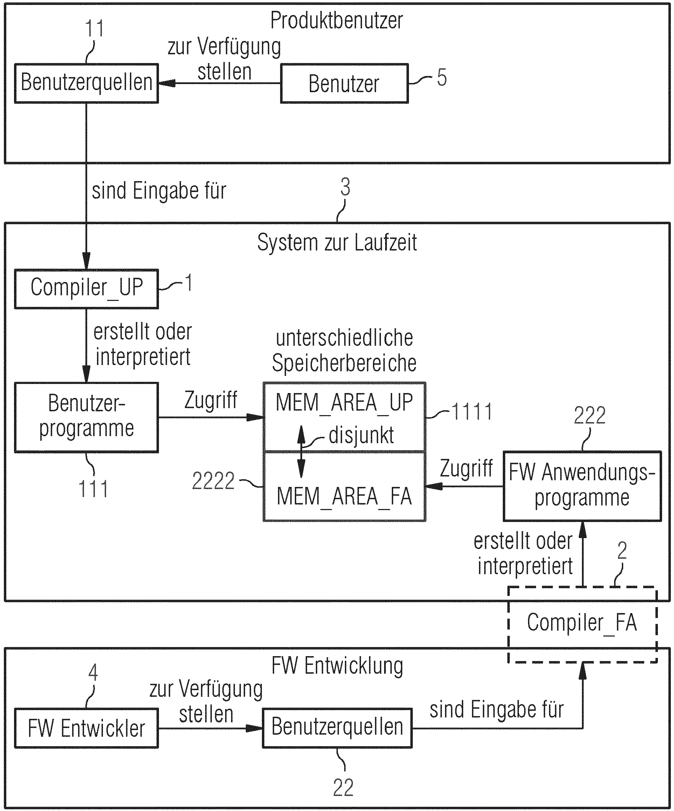

Es zeigt
- Fig. 1: eine schematische Darstellung des erfindungsgemä-ßen Systems.

### DETAILLIERTE BESCHREIBUNG DER ERFINDUNG

Fig. 1 zeigt eine schematische Darstellung des erfindungsgemäßen Systems 3, aufweisend:
- einen ersten Quellcodeumwandler 1,
- eine erste Binärdatei 111, welche von dem ersten Quellcodeumwandler 1 aus einem ersten Quellcode 11 erstellt wurde,
- eine zweite Binärdatei 222, wobei die zweite Binärdatei 222 von einem zweiten Quellcodeumwandler (2) aus einem zweiten Quellcode 22 erstellt wurde,
wobei die erste Binärdatei 111 als Benutzeranwendungsprogramm von einem Benutzer 5 ausgebildet ist und
wobei die zweite Binärdatei 222 als Firmware-Anwendungsprogramm von einem Hersteller 4 ausgebildet ist,
- einen ersten Speicherbereich 1111 und
- einen zweiten Speicherbereich 2222,
wobei der erste Quellcodeumwandler 1 ausgebildet ist, die erste Binärdatei 111 so zu erstellen, dass diese auf den erster Speicherbereich 1111 zugreifen kann,
wobei der erste Quellcodeumwandler 1 außerdem ausgebildet ist, die erste Binärdatei 111 so zu erstellen, dass diese nicht auf den zweiten Speicherbereich 2222 zugreifen kann, und
wobei die zweite Binärdatei 222 ausgebildet ist, auf den zweiten Speicherbereich 2222 zuzugreifen.

Der zweite Quellcodeumwandler 2 ist bewusst in der Mitte zwischen dem System 3 und dem Bereich außerhalb des Geräts in Richtung Hersteller 4 dargestellt, da dies davon abhängt, ob es sich um einen Compiler 2 auf dem System 3 oder einen Interpreter 2 bei dem Entwickler bzw. Benutzer 5 handelt. Handelt es sich bei dem zweiten Quellcodeumwandler 2, um einen Interpreter 2, so muss dieser auf dem System 3 vorliegen und gegen Manipulationen geschützt sein. Handelt es sich bei dem zweite Quellcodeumwandler 2 dagegen um einen Compiler 2, wird dieser in der Regel nicht auf dem System 3, sondern nur beim Entwickler bzw. Benutzer 5 vorliegen.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. System (3), aufweisend:
- einen ersten Quellcodeumwandler (1),
- eine erste Binärdatei (111), welche von dem ersten Quellcodeumwandler (1) aus einem ersten Quellcode (11) erstellt wurde,
- eine zweite Binärdatei (222) und
- einen zweiten Speicherbereich (2222),
wobei der erste Quellcodeumwandler (1) ausgebildet ist, die erste Binärdatei (111) so zu erstellen, dass diese auf einen ersten Speicherbereich (1111) zugreifen kann,
wobei der erste Quellcodeumwandler (1) außerdem ausgebildet ist, die erste Binärdatei (111) so zu erstellen, dass diese nicht auf den zweiten Speicherbereich (2222) zugreifen kann, und
wobei die zweite Binärdatei (222) ausgebildet ist, auf den zweiten Speicherbereich (2222) zuzugreifen.

2. System (3) nach Anspruch 1,
wobei die zweite Binärdatei (222) von einem zweiten Quellcodeumwandler (2) aus einem zweiten Quellcode (22) erstellt wurde.

3. System (3) nach Anspruch 2,
außerdem aufweisend:
- den zweiten Quellcodeumwandler (2), wobei der zweite Quellcodeumwandler (2) als Interpreter ausgebildet ist.

4. System (3) nach einem der Ansprüche 3,
wobei der zweite Quellcodeumwandler (2) als Compiler ausgebildet ist.

5. System (3) nach einem der Ansprüche 2 bis 4,
wobei der zweite Quellcodeumwandler (2) ausgebildet ist, die zweite Binärdatei (22) so zu erstellen, dass diese auf den zweiten Speicherbereich (2222) zugreifen kann.

6. System (3) nach einem der vorhergehenden Ansprüche,
wobei die zweite Binärdatei (222) außerdem ausgebildet ist, auf den ersten Speicherbereich (1111) zuzugreifen.

7. System (3) nach einem der vorhergehenden Ansprüche,
wobei der erste Quellcodeumwandler (1) als Compiler oder Interpreter ausgebildet ist.

8. System (3) nach einem der vorhergehenden Ansprüche, außerdem aufweisend:
- den ersten Speicherbereich (1111).

9. System (3) nach einem der vorhergehenden Ansprüche,
wobei die erste Binärdatei (111) als Benutzeranwendungsprogramm ausgebildet ist und/oder
wobei die zweite Binärdatei (222) als Firmware-Anwendungsprogramm ausgebildet ist.

10. System (3) nach einem der vorhergehenden Ansprüche, wobei das System als:
- ein Gerät und/oder
- eine speicherprogrammierbare Steuerung und/oder
- ein Motion-Control-System und/oder
- ein Edge-Gerät
ausgebildet ist.

11. System (3) nach einem der vorhergehenden Ansprüche, wobei der erste Quellcodeumwandler (1) einen Manipulationsschutz aufweist, welcher den ersten Quellcodeumwandler (1) vor einer Manipulation schützt.

12. System (3) nach einem der vorhergehenden Ansprüche, wobei der zweite Speicherbereich (2222) anhand mindestens eines führenden Adressbits erkennbar ist.

13. System (3) nach einem der vorhergehenden Ansprüche, wobei der erste Speicherbereich (1111) und der zweite Speicherbereich (2222) anhand eines Musters voneinander unterscheidbar sind.

14. System (3) nach einem der vorhergehenden Ansprüche, außerdem aufweisend:
- einen dritten Quellcodeumwandler,
- eine dritte Binärdatei, welche von dem dritten Quellcodeumwandler aus einem dritten Quellcode erstellt wurde,
wobei der dritte Quellcodeumwandler ausgebildet ist, die dritte Binärdatei so zu erstellen, dass diese auf einen dritten Speicherbereich zugreifen kann,
wobei der dritte Quellcodeumwandler außerdem ausgebildet ist, die dritte Binärdatei so zu erstellen, dass diese nicht auf den ersten Speicherbereich (1111) und den zweiten Speicherbereich (2222) zugreifen kann.

15. Verfahren zum Zugreifen auf einen ersten Speicherbereich (1111) durch eine erste Binärdatei (111) und zum Zugreifen auf einen zweiten Speicherbereich (2222) durch eine zweite Binärdatei (222),
mit den Schritten:
- Ein Erstellen der ersten Binärdatei (111) aus einem ersten Quellcode (11), wobei die erste Binärdatei (111) so erstellt wird, dass diese nicht auf den zweiten Speicherbereich (2222) zugreifen kann,
- Ein Zugreifen auf den ersten Speicherbereich (1111) durch die erste Binärdatei (111) und
- Ein Zugreifen auf den zweiten Speicherbereich (2222) durch die zweite Binärdatei (222).
